# EUROPEAN PATENT APPLICATION

(11) **EP 4 503 513 A1**
(43) Date of publication of application: **05.02.2025**
(21) Application number: 23188770.4
(22) Date of filing: 31.07.2023
(51) Int. Cl.: H04L 9/40, H04L 9/32

(54) **A METHOD FOR OPERATING A LOCAL NETWORK OF AN APPLICATION COMPRISING AT LEAST ONE ELECTRONIC COMPUTING DEVICE, A COMPUTER PROGRAM PRODUCT, A COMPUTER-READABLE STORAGE MEDIUM, AS WELL AS A COMMUNICATION DEVICE**

(71) Applicant: Siemens Aktiengesellschaft, 80333 München (DE)
(72) Inventor: Höfig, Kai, 83101 Rohrdorf (DE)
(74) Representative: Siemens Patent Attorneys

(57) **Abstract**

The invention relates to a method for operating a local network (10) of an application (14) comprising at least one electronic computing device (16, 18, 20, 22, 24) by a communication device (12), comprising the steps of: providing at least one communication node (28) of the communication device (12); establishing a communication (32) between the at least one electronic computing device (16, 18, 20, 22, 24) and the communication node (28); storing at least one blockchain information (34) for the at least one electronic computing device (16, 18, 20, 22, 24) from a blockchain node (30) by a storing device (36) of the communication device (12); and providing the at least one blockchain information (34) for the at least one electronic computing device (16, 18, 20, 22, 24) by the communication node (28). Furthermore, the invention relates to a computer program product, a computerreadable storage medium, as well as to a communication device (12) .

## Description

The present invention relates to a method for operating a local network of an application comprising at least one electronic computing device by a communication device according to the pending claim 1. Furthermore, the present invention relates to a computer program product, a computer-readable storage medium, as well as to a communication device.

When requiring data from a blockchain, for example by a communication partner such as a human being with a client directly or any other application or machine, a connection to the blockchain network has to be established. To trust the data that comes from a network node, the entire blockchain can be downloaded from the network and be verified recalculating the hash values starting from block 0, known as the genesis block. The genesis block itself has to be known to the communication partner beforehand, for example by downloading it from a trustworthy source. For most blockchain applications, the data of the genesis block is already implemented into the client software.

The problem for such a protocol is, that when a new communication partner really wants to trust the data, he has to download the entire blockchain and do the recalculation of the hashes. To ease up communication, there is a concept called "lightweight node". A lightweight node does not hold the entire blockchain, but only works as a proxy to a full node. So, when a client wants to write data to or get data from the blockchain, it can communicate with such a lightweight node. A client's transactions should then be visible, if the node is working properly, after a certain time on the blockchain. Also, if data is received from such a node, it cannot be trusted, since the client is not reading the data from the blockchain itself, but via another peer. So, a cross check via multiple nodes can help to verify that certain data stems really from the blockchain and is not simply made up by some software client.

So, either a communication partner is a full node, or it cannot trust the blockchain data, even if it comes from a lightweight node. Especially for real-time applications such as machinery control systems, automotive electronics, trade onboard systems or any other general purpose industrial automation systems (which may be regarded as an application), it makes no sense, nor is it possible for every electronic computing device in a local network or communication partner to be a full node. So using blockchains applications in industrial automation is challenging since trustworthiness has to compete against available resources in terms of memory and computational power of the electronic computing devices.

It is an object of the present invention to provide a method, a computer program product, a computer-readable storage medium, as well as a communication device, by which an efficient communication for a local network of an application comprising at least one electronic computing device is provided.

This object is solved by a method, a computer program product, a computer-readable storage medium, as well as a communication device according to the independent claims. Advantageous embodiments are presented in the dependent claims.

According to an aspect of the invention a method for operating a local network of an application comprising at least one electronic computing device by a communication device is provided. At least one communication node of the communication device is provided. A communication between the at least one electronic computing device and the communication node is established. At least one blockchain information for the at least one electronic computing device from a blockchain node is stored by a storing device of the communication device. The at least one blockchain information for the at least one electronic computing device is provided by the communication node.

Therefore, the communication node is a special proxy for the blockchain application and plays the role of a communication partner for the local network of the at least one electronic computing device to the blockchain. The communication node acts like a proxy to the network but can do more than a general-purpose lightweight node. It is a special lightweight node for industry automation applications. Especially for real-time applications such as machinery control systems, automotive electronics, trade onboard systems or any other general purpose industrial automation systems, which may be regarded as an application, the method can be used. Since the communication node is aware of the local communication partners that it is connected to, it can buffer the data from the blockchain, in particular the blockchain information that concerns the local electronic computing device. Since it buffers data, it can also be used to increase the variability to blockchain data to the local electronic computing devices, for example when a network connection becomes unavailable over a certain amount of time.

Furthermore, it becomes much faster for a local electronic computing device to retrieve a data from a buffer than requesting data and wait for a lightweight node to retrieve it over an established network connection. In the case that a full node is used as the communication node, the resources might be too small to hold the entire blockchain.

According to an embodiment the communication node is provided as a lightweight node. In particular, as a lightweight node, the communication node might trust another communication node so that it does not need to download and recalculate the entire blockchain. Therefore, an efficient way for operating the local network is provided.

In another embodiment the communication node is provided as a full node. In particular, a full node verifies all of the rules of the blockchain. In particular, the full node downloads every block and transaction of the blockchain and checks them against the blockchain rules. Therefore, an efficient way for operating the local network is provided.

In another embodiment the full node checks the integrity of the provided blockchain information by recalculating hashes of the blockchain information. Therefore, an efficient way for operating a local network is provided.

In another embodiment the local network comprises a plurality of electronic computing devices, wherein the communication node communicates with each of the electronic computing devices. In particular, the one communication node is connected to the plurality of electronic computing devices. In particular, the local network may comprise more than one electronic computing devices. The communication node then is also connected to the blockchain node. The communication node therefore may store the blockchain information for the plurality of electronic computing devices. In particular, the communication node may store a plurality of blockchain information concerning the plurality of electronic computing devices. Therefore, an efficient way for operating the local network is provided.

In another embodiment for the communication between the at least one communication node and the at least one electronic computing device a public key infrastructure is provided. Each communication partner may hold a verifiable credential that entitles the communication node and/or the electronic computing device to be valid and trustworthy communication partner in this network. By doing so, the electronic computing device for example may request data from the communication node and can ensure that the data comes from the original blockchain.

In another embodiment for the communication between the at least one communication node and the blockchain node a public key infrastructure is provided. Therefore, each communication partner holds a verifiable credential that entitles communication node and the blockchain node to be valid and trustworthy communication partners in this network. Therefore, it can be ensured, that the at least one electronic computing device requests data from a trusted communication node, and that the data may come from the original blockchain.

In another embodiment the communication node buffers a key material and/or certificate material from the blockchain node for providing it to the at least one electronic computing device. In particular, the communication node itself may be used to support the public key infrastructure on a level of machine-to-machine communication. Keys and certificates may be distributed via the blockchain node, whereas the communication partner securely hold their private key material. The communication between the nodes of such a local network can then be encrypted or certificates can be used for authorization. When a new communication partner enters the local network, the communication node may then buffer the key and certificate material from the center blockchain and when required, provided immediately, even in an offline scenario.

In another embodiment depending on an event the communication revokes a key material and/or certificate material for the at least one electronic computing device. For example, if the electronic computing device has been compromised or is simply not allowed to communicate anymore, the key material and the certificates can be revoked using the blockchain. The communication node may also buffer this information when online and then distributes that information among the local electronic computing devices. Therefore, an efficient way for operating the local network is provided.

In another embodiment at least a further communication node is provided, wherein the further communication node is connected between the at least one electronic computing device and the communication node. In particular, the at least further communication node may be provided as a lightweighted node or fully node. Therefore, an easy way for operating the local network is provided.

In another embodiment at least a further communication node is provided, wherein the further communication node is connected between the blockchain node and the communication node. In particular, the further communication node can also be a lightweighted or a fully node in that case. Therefore, an easy way for operating the local network is provided.

In another embodiment the communication node provides the blockchain information offline for the at least one electronic computing device. In particular, the blockchain information is stored in the communication node and therefore, if for example a communication between the blockchain node and the communication node may collapse, the communication node is still able to provide the blockchain information for the electronic computing device. Therefore, a method for operating the local network is provided.

In particular the method may be a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the invention relates to a communication device for a local network of an application comprising at least one communication node, wherein the communication device is configured for performing a method according to the preceding aspect. In particular, the method is performed by the communication device.

Furthermore, the invention relates to a local network comprising at least the communication device and at least one electronic computing device.

Advantageous forms of configuration of the method are to be regarded as advantageous forms of the computer program product, the computer-readable storage medium, the communication device, as well as the local network.

Therefore, the local network as well as the communication device comprises means for performing the method.

The communication device/ communication node may also comprise at least an electronic computing device. A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

Therefore:
FIG 1 shows a schematic block diagram according to a first embodiment of a local network; and
FIG 2 another schematic block diagram according to another embodiment of a local network.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

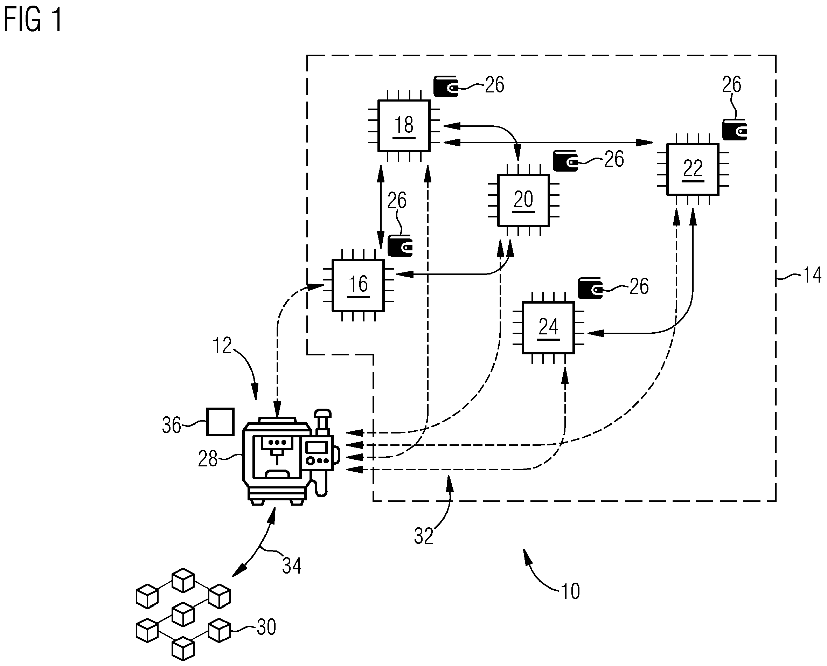

Fig. 1 shows a schematic block diagram according to an embodiment of a local area network 10. The local network 10 comprises at least one communication device 12. The communication device 12 is configured for an application 14. The application 14 comprises at least one electronic computing device 16, 18, 20, 22, 24. According to the shown embodiment, the application 14 comprises a first electronic computing device 16, a second electronic computing device 18, a third electronic computing device 20, a fourth electronic computing device 22, as well as a fifth electronic computing device 24. Each of the electronic computing devices 16, 18, 20, 22, 24 comprises at least a so-called blockchain wallet 26.

Furthermore, Fig. 1 shows a communication node 28 of the communication device 12 as well as a blockchain node 30.

According to the shown embodiment a method for operating the local network 10 of the application 14 is provided, wherein at least one communication node 28 is provided. A communication 32 between the at least one electronic computing device 16, 18, 20, 22, 24 and the communication node 28 is provided. At least one blockchain information 34 for the at least one electronic computing device 16, 18, 20, 22, 24 is stored in a storing device 36 of the communication device 12. The at least one blockchain information 34 is provided for the at least one electronic computing device 16, 18, 20, 22, 24 by the communication node 28.

According to the shown embodiment the communication node 28 is a full node. Furthermore, the full node may check the integrity of the provided blockchain information 34 by recalculating hashes of the blockchain information 34. Furthermore, as shown in Fig. 1, the communication node 28 may communicate with each of the electronic computing devices 16, 18, 20, 22, 24.

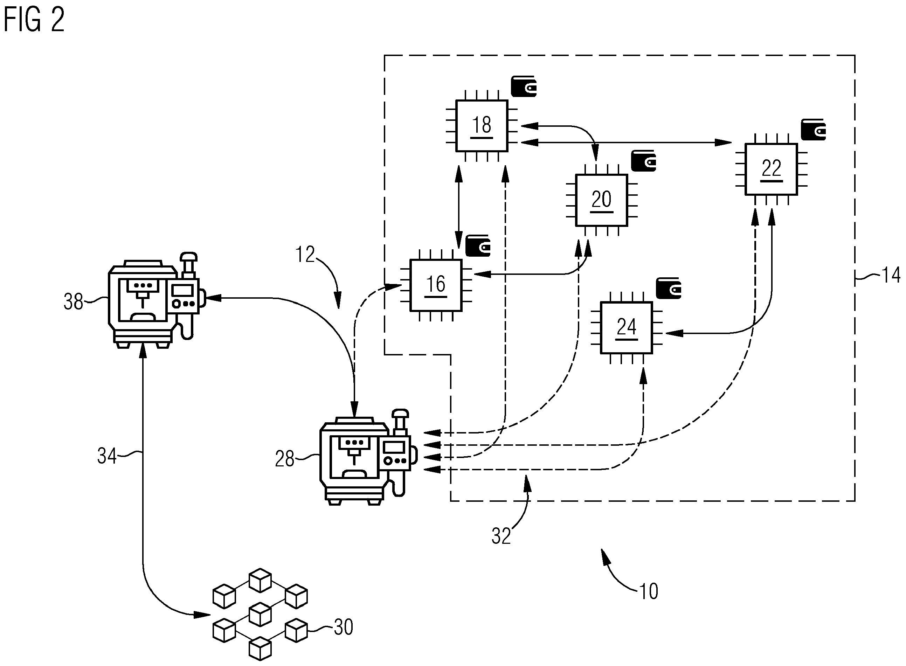

Fig. 2 shows another schematic block diagram according to an embodiment of a local network 10. Fig. 2 shows, that a further communication node 38 may be provided. As shown in Fig. 2, the at least one further communication node 38 is provided, wherein the further communication node 38 is connected between the blockchain 30 and the communication node 28. Alternatively, the further communication node 38 may be connected between the at least one electronic computing device 16, 18, 20, 22, 24 and the communication node 28.

According to an embodiment for the communication between the at least one communication node 28 and the at least one electronic computing device 16, 18, 20, 22, 24 a public key infrastructure is provided. Furthermore, for the communication between the at least one communication node 28 and the blockchain node 30 a public key infrastructure is provided. Furthermore, the communication node 28 buffers a key material and/or a certificate material from the blockchain node 30 for providing it to the at least one electronic computing device 16, 18, 20, 22, 24. Furthermore, depending on an event the communication node 28 may revoke a key material and/or certificate material for the at least one electronic computing device 16, 18, 20, 22, 24.

In particular Fig. 1 and Fig. 2 shows, that the communication node 28 may be a special proxy for the blockchain application and plays the role of a communication partner for the local network 10 of the electronic computing devices 16, 18, 20, 22, 24 to the blockchain node 30. It is used to either act as a full node that checks the integrity of the provided blockchain data by recalculating the hashes, like shown in Fig. 1, or to act as a lightweight node that itself trusts another communication node, in particular the further communication node 38, so that it does not need to download and recalculate the entire blockchain, like shown in Fig. 2.

The communication node 28 acts like a proxy to the network but may do more than a general-purpose lightweight node according to the state of the art. It is a special lightweight node for industry automation applications. Since it is aware of the local communication partners that it is connected to, it can buffer the data from the blockchain node 30 that concern the local electronic computing devices 16, 18, 20, 22, 24. Since it buffers data, it can also be used to increase the availability to blockchain data to the local electronic computing devices 16, 18, 20, 22, 24, for example when a connection becomes unavailable over a certain amount of time. Furthermore, it becomes much faster for a local electronic computing device 16, 18, 20, 22, 24 to retrieve data from a buffer then requesting data and wait for a lightweight node to retrieve it over an established network connection.

In the case that a full node is used, the resources might to be small to hold the entire blockchain.

To establish trustworthy connection between the electronic computing devices 16, 18, 20, 22, 24 to the communication node 28, between the communication node 28 and the blockchain node 30 or to the further communication node 38, a public key infrastructure may be used. Each communication partner holds a verifiable credential that entitles the node to be a valid and trustworthy communication partner in this local network 10. By doing so, an electronic computing device 16, 18, 20, 22, 24 may request data from the trusted communication node 28 and can be sure, that the data comes from the original blockchain node 30.

Hereafter, three different scenarios are provided.

In a first scenario, the communication node 28 itself can be used to support public key infrastructure on a level of machine-to-machine communications. Keys and certificates may be distributed via the blockchain, whereas the communication partner securely hold their private key material. The communication between the nodes of such a local network 10 can then be encrypted or certificates can be used for authorization. When a new communication partner enters the local network 10, the communication node 28 may then buffer the key and certificate material from the central blockchain node 30 and when required, provide it immediately, even in an offline scenario. Furthermore, when an electronic computing device 16, 18, 20, 22, 24 has been compromised or is simply not allowed to communicate anymore, the key material can be revoked using the blockchain. The communication node 28 may also buffer this information when online and then distribute that information among the local electronic computing devices 16, 18, 20, 22, 24.

In another scenario, since the local networks of machinery can change, for example a new communication partner can locally appear and disappear, for example in a robot environment, it is important to manage local access rights. Even when no public key infrastructure is in place, the communication node 28 may buffer the information which electronic computing device 16, 18, 20, 22, 24 can execute which specific function on another electronic computing device 16, 18, 20, 22, 24 using the blockchain information 34. This access rights then can be changed, updated or extended on the blockchain and this information may be distributed via the network by the communication nodes 28 to the local electronic computing devices 16, 18, 20, 22, 24.

A third scenario may be the integration point communication. Not only can information be local between the electronic computing device 16, 18, 20, 22, 24 of a local network 10, but also be from the local electronic computing devices 16, 18, 20, 22, 24 to a centralized integration point such as a node that collects statistical data for business analytics or maintenance. Here, the communication node 28 is collecting the data and buffers it until the local network 10 becomes available again. In this scenario, the communication resources are centralized in the communication node 28 and the electronic computing devices 16, 18, 20, 22, 24 can send the information over the communication node 28 without the need to have a connection to the blockchain node 30 and without the need to delay the communication due to connectivity problems.

## Claims

1. A method for operating a local network (10) of an application (14) comprising at least one electronic computing device (16, 18, 20, 22, 24) by a communication device (12), comprising the steps of:
- providing at least one communication node (28) of the communication device (12);
- establishing a communication (32) between the at least one electronic computing device (16, 18, 20, 22, 24) and the communication node (28);
- storing at least one blockchain information (34) for the at least one electronic computing device (16, 18, 20, 22, 24) from a blockchain node (30) by a storing device (36) of the communication device (12); and
- providing the at least one blockchain information (34) for the at least one electronic computing device (16, 18, 20, 22, 24) by the communication node (28).

2. A method according to claim 1, wherein
the communication node (28) is provided as a lightweight node.

3. A method according to claim 1, wherein
the communication node (28) is provided as a full node.

4. A method according to claim 3, wherein
the full node checks the integrity of the provided blockchain information (34) by recalculating hashes of the blockchain information (34).

5. A method according to any one of claims 1 to 4, wherein the local network (10) comprises a plurality of electronic computing devices (16, 18, 20, 22, 24), wherein the communication node (28) communicates with each of the electronic computing devices (16, 18, 20, 22, 24).

6. A method according to any one of claims 1 to 5, wherein for the communication (32) between the at least one communication node (28) and the at least one electronic computing device (16, 18, 20, 22, 24) a public key infrastructure is provided.

7. A method according to any one of claims 1 to 6, wherein for the communication between the at least one communication node (28) and the blockchain node (30) a public key infrastructure is provided.

8. A method according to claims 6 or 7, wherein
the communication node (28) buffers a key material and/or a certificate material from the blockhain node (30) for providing it to the at least one electronic computing device (16, 18, 20, 22, 24).

9. A method according to any of claims 6 to 8, wherein depending on an event the communication node (28) revokes a key material and/or a certificate material for the at least one electronic computing device (16, 18, 20, 22, 24).

10. A method according to any one of claims 1 to 9, wherein at least a further communication node (38) is provided, wherein the further communication node (38) is connected between the at least one electronic computing device (16, 18, 20, 22, 24) and the communication node (28).

11. A method according to any one of claims 1 to 10, wherein at least a further communication node (38) is provided, wherein the further communication node (38) is connected between the blockchain node (30) and the communication node (28) .

12. A method according to any one of claims 1 to 11, wherein the communication node (28) provides the blockchain information (34) offline for the at least one electronic computing device (16, 18, 20, 22, 24).

13. A computer program product comprising program code means for performing a method according to any one of claims 1 to 12.

14. A computer-readable storage medium comprising at least the computer program product according to claim 13.

15. A communication device (12) for a local network (10) of an application (14) comprising at least one electronic computing device (16, 18, 20, 22, 24), comprising at least one communication node (28), wherein the communication device (12) is configured for performing a method according to any one of claims 1 to 12.
